# EUROPÄISCHE PATENTSCHRIFT

(11) **EP 3 717 314 B1**
(45) Veröffentlichungstag und Bekanntmachung des Hinweises auf die Patenterteilung: **11.08.2021**
(21) Anmeldenummer: 18811204.9
(22) Anmeldetag: 26.11.2018
(51) Int. Cl.: B60S 3/04

(54) **WASCHKONFIGURATOR**
WASH CONFIGURATOR
CONFIGURATEUR DE LAVAGE

(30) Priorität: 27.11.2017 DE 102017127979
(43) Veröffentlichungstag der Anmeldung: 07.10.2020
(73) Patentinhaber: WashTec Holding GmbH, 86153 Augsburg (DE)
(72) Erfinder: MAYER, Stefan, 86356 Neusaess (DE); SATTLER, Andreas, 81543 Muenchen (DE); HEINZ, Bernhard, 86368 Gersthofen (DE)
(74) Vertreter: Schwarz, Claudia
(86) Internationale Anmeldenummer: PCT/EP2018/082513
(87) Internationale Veröffentlichungsnummer: WO 2019/101987

(56) Entgegenhaltungen:
- DE-A1-102016 101 481
- US-A1- 2003 233 153

## Beschreibung

Die vorliegende Erfindung liegt auf dem Gebiet der automatischen Waschanlagen für Fahrzeuge und betrifft insbesondere das Erzeugen von Waschprogrammen zum Betrieb der Waschanlage.

Im Stand der Technik ist es bekannt, eine Menge von Standardwaschprogrammen vorzukonfigurieren und die Waschanlage dann mit den vorkonfigurierten Standardwaschprogrammen an einen Betreiber auszuliefern. Der Betreiber kann vor Inbetriebnahme der Anlage aus der Menge der Standardwaschprogramme ein bestimmtes auswählen.

Die Waschanlagen umfassen eine Vielzahl von elektrisch steuerbaren Maschinenbauteilen, wie Pumpen, Ventilen, Antrieben etc., die in unterschiedlichen Konfigurationen in der Waschanlage installiert sein können. Darüber hinaus, hat jeder Betreiber spezifische Erfordernisse (z.B. lokaler Wasserversorgungsdruck, typischer Verschmutzungsgrad der Fahrzeuge etc.).

Um diesen Anforderungen gerecht zu werden, ist es bei bekannten Anlagen vorgesehen, dass der Betreiber aus einer Menge von ca. 250 unterschiedlichen Standardwaschprogrammen ein für ihn passendes auswählen kann. Dabei kann er durch entsprechende Parametrisierungen Anpassungen an die aktuellen Gegebenheiten vornehmen.

Damit besteht jedoch das Problem, dass der Betreiber auf die Auswahl der Standardwaschprogramme beschränkt ist. Das erweist sich als nachteilig.

Ein weiteres Problem besteht in der Wartungsintensität der Anlagen. Nach Auslieferung und Inbetriebnahme einer Anlage, konnten bisher Anpassungen zum Betrieb der Anlage nur sehr arbeitsintensiv und auf Maschinenbauteilebene durch einen Servicetechniker ausgeführt werden.

Nach Auslieferung der Anlage, war es bislang nicht möglich, den Leistungsumfang der Anlage durch einfache, schnelle Maßnahmen zu verändern.

Die gattungsgemäße DE 10 2016 101481 A1 offenbart ein Verfahren zum Erzeugen eines Waschprogramms zum Betreiben einer automatischen Waschanlage.

Ausgehend von diesem Stand der Technik hat sich die vorliegende Erfindung zur Aufgabe gestellt, das Betreiben von automatischen Fahrzeugwaschanlagen zu verbessern und insbesondere die Betriebskosten zu senken. Des Weiteren soll das Betreiben der Waschanlage nach Auslieferung flexibler an den jeweiligen Bedarf anpassbar sein. Zudem soll das Erzeugen der ausführbaren Waschprogramme an eine aktuell erfasste Anlagenkonfiguration angepasst sein.

Diese Aufgabe wird durch den Gegenstand nach den beiliegenden einander nebengeordneten Patentansprüchen gelöst.

Die Erfindung betrifft ein Verfahren zum Erzeugen eines Waschprogramms zum Betreiben einer automatischen Fahrzeug-Waschanlage. Auf der ausgelieferten Waschanlage sollen lokal Waschprogramme erzeugbar sein, die bei der aktuellen Bestückung und Konfiguration der Waschanlage auch ausführbar sind. Dabei soll auch der Leistungsumfang des Waschprogramms vom Betreiber bestimmbar sein.

Gemäß einem ersten Aspekt umfasst das Verfahren folgende Schritte:
- Einlesen eines Bestückungsdatensatzes, der die aktuelle Bestückung der Waschanlage mit Maschinenbauteilen repräsentiert;
- Bestimmen von aktivierbaren Funktionsblöcken auf Basis des eingelesenen Bestückungsdatensatzes und Bereitstellen bzw. Ausgeben derselben insbesondere auf einer Benutzerschnittstelle zur Auswahl durch den Anwender;
- Erfassen einer Auswahl seitens des Anwenders (Betreibers) der bereitgestellten aktivierbaren Funktionsblöcke;
- Automatisches Erzeugen des Waschprogramms mit einer berechneten Abfolge von ausgewählten aktivierbaren Funktionsblöcken zum Betreiben der Waschanlage.

Im Folgenden wird eine Definition der in dieser Anmeldung verwendeten Begrifflichkeiten gegeben.

Bei dem Bestückungsdatensatz handelt es sich um einen digitalen Datensatz, der eine Ausrüstung von Maschinenbauteilen der Waschanlage repräsentiert. Der Bestückungsdatensatz kann z.B. die Installation von Software und/oder Hardware kennzeichnen oder die aktuell vorliegende Ausstattung der Maschine von mehreren Ausstattungsvarianten. So können je nach Maschine unterschiedliche Betriebsaggregate, wie Pumpen, Ventile, Antriebsaggregate etc. eingebaut sein. Die vorhandene Ausstattung bzw. die verbauten Maschinenbauteile sind in dem Bestückungsdatensatz repräsentiert. Der Bestückungsdatensatz umfasst somit insbesondere ein Datensatzelement, das die "Verbau"-Situation von Maschinenbauteilen oder Betriebsaggregaten in der Waschanlage repräsentiert. Dazu gehört auch die Information, an welcher Position der Waschanlage welches Bauteil verbaut ist und in welcher Version und Konfiguration. Diese Information kann in einem Positionselement des Bestückungsdatensatzes gespeichert und repräsentiert sein. Der Bestückungsdatensatz kann vorzugsweise einen veränderlichen bzw. dynamischen Betriebskonstellationsdatensatz und einen unveränderlichen und fixen Anteil, nämlich den Konfigurationsdatensatz, umfassen. Beide Anteile beziehen sich ausschließlich auf die in der Waschanlage verbauten Maschinenbauteile. Der fixe Anteil (Konfigurationsdatensatz) bezieht sich auf die (ausgelieferte) Ausrüstung und Konfiguration von Maschinenbauteilen der Waschanlage (Verbau-Situation). Er bleibt üblicherweise nach Auslieferung der Anlage fix. Der variable, veränderliche Anteil (Betriebskonstellationsdatensatz) bezieht sich auf Änderungen von Betriebsbedingungen für die Maschinenbauteile der Waschanlage, wie z.B. veränderter Wasserdruck. Er kann sich auch auf Änderungen an den Maschinenbauteilen beziehen (z.B. im Fehlerfall oder bei Ausfall eines Maschinenbauteiles). Der variable Anteil des Bestückungsdatensatzes wird vorzugsweise kontinuierlich in aktualisierter Form eingelesen oder erfasst. Dies erfolgt vorzugsweise in einer Zeitphase nach Auslieferung der Anlage und während des Betriebs.

Der Bestückungsdatensatz wird üblicherweise direkt mit der Anlage ausgeliefert und ist in einem lokalen Speicher oder einer Speicherkarte auf der Anlage hinterlegt und verfügbar. Alternativ kann er auch über eine Schnittstelle abgerufen werden (z.B. httpbasierte Schnittstelle). Der Bestückungsdatensatz wird somit vorzugsweise aus einem internen lokalen Speicher der Waschanlage eingelesen.

Vorzugsweise kann der Bestückungsdatensatz auch eine Konfiguration bzw. eine Parametrisierung der Maschinenbauteile umfassen, wie beispielsweise eine Länge und/oder ein Durchmesser eines Schlauches, die maximale Pumpleistung einer Dosierpumpe, die Größe von Vorratsbehältern und/oder maximale oder minimale Fahrgeschwindigkeiten von Antrieben etc. Damit kann die Erzeugung des Waschprogramms noch spezifischer und dediziert für die jeweilige Konfiguration der Maschinenbauteile ausgeführt werden.

In einer weiteren bevorzugten Ausführungsform der Erfindung umfasst der Bestückungsdatensatz ein Positionselement. Dieses kennzeichnet eine Position des Maschinenbauteils in der Waschanlage. Damit können auch mehrere Maschinenbauteile desselben Typs der Waschanlage dediziert adressiert werden. So können beispielsweise mehrere gleichartige Bürsten an unterschiedlichen Positionen der Waschanlage angeordnet sein. Das zu erzeugende Waschprogramm kann in dieser Ausführungsform der Erfindung vorteilhafterweise auf die jeweilige Positionierung der Bürste abstellen und deren zeitliche Aktivierung regeln.

Ein einzelnes Maschinenbauteil oder eine Gruppe von Maschinenbauteilen sind ausgebildet, um einen bestimmten Funktionsblock des Waschprogramms auszuführen. Das Waschprogramm kann eine Abfolge von Schritten umfassen. Dazu können unterschiedliche Funktionsblöcke erforderlich sein. So kann z.B. eine Gruppe von Maschinenbauteilen, wie eine Wasserpumpe, eine Dosierpumpe, Wasserventile, Bürstenrotationsantriebe und ggf. weitere Hub- und Fahrantriebe erforderlich sein, um den Funktionsblock (bzw. -baustein) "Bürstenwäsche" auszuführen. Zur Ausführung eines Schrittes des Waschprogramms ist somit ein einzelnes Maschinenbauteil oder einer Gruppe von Maschinenbauteilen erforderlich. In einer weiteren bevorzugten Ausführungsform der Erfindung umfasst das Waschprogramm eine Abfolge von Schritten, die auf gleichen und/oder unterschiedlichen Maschinenbauteilen ausgeführt werden.

Bei den Maschinenbauteilen handelt es sich z.B. um Betriebsaggregate der Waschanlage oder um Baueinheiten derselben. Die Maschinenbauteile sind vorzugsweise elektronisch regelbar und verfügen dazu über elektronische Schnittstellen zum Datenaustausch.

Bei den Funktionsblöcken handelt es sich um übergeordnete Funktionen, die die Waschanlage ausführen soll. Ein Funktionsblock ist ein modularer Baustein des Waschprogramms. Der Funktionsblock ist somit ein Modul oder ein Schritt im Waschprogramm. So können z.B. ein Funktionsblock "Felgenreinigung", "Bürstenwäsche", "Vorreinigung" und/oder "Intensivtrocknung" vorgesehen sein. Es können jederzeit neue Funktionsblöcke definiert werden. Erfindungsgemäß wird aufgrund von aktuell erfassten Größen bestimmt, welche Funktionsblöcke zu einem an die lokal und aktuell bestehenden Gegebenheiten angepassten Waschprogramm verschaltet werden sollen. Die Funktionsblöcke beschreiben die auszuführenden Funktionen oder Aktionen der Waschanlage nicht auf einer Bauteilebene (also nicht auf Basis der Maschinenbauteilebene, wie z.B. "Ventil 1 auf", "Schalter 2 schließen", "Dosierpumpe ein"), sondern auf einer übergeordneten funktionalen Ebene und kennzeichnen die Funktionen aus Betreiber- oder Anwendersicht. Ein Funktionsblock bezieht sich somit auf einen Waschprogrammabschnitt.

Ein Funktionsblock hat jedoch bestimmte Anforderungen auf Bauteilebene. So setzt z.B. eine Bürstenwäsche das Maschinenbauteil "Bürste" voraus. Welche technischen Voraussetzungen, insbesondere auf Bauteilebene, mit einem bestimmten Funktionsblock verbunden sind, sind in dem jeweiligen Funktionsblock hinterlegt und fest codiert. Ein Funktionsblock umfasst weiterhin Informationen über eine zulässige Verschaltbarkeit im Prozessablauf mit anderen Funktionsblöcken. So kann - schematisch beschrieben -für den Block 1 definiert sein, dass vor dessen Ausführung notwendigerweise Block a und b und anschließend Block d auszuführen sind. Beispielsweise kann definiert sein, dass vor einer "Trocknung" immer eine "Wäsche" stattgefunden haben muss - oder vor dem Schritt "Intensivreinigung" ist es notwendig, dass ein Reiniger appliziert worden ist. Weiterhin können bestimmte andere Funktionsblöcke in einer White-List hinterlegt sein, die mit dem jeweiligen Funktionsblock verschaltet werden dürfen und in einer Black-List solche, die nicht zulässig zu einem Waschprogramm verschaltet werden können. Jedem Funktionsblock kann eine White-List und eine Black-List zugeordnet sein. Ein Funktionsblock ist über seine Identifikationsnummer eindeutig identifizierbar. In einer bevorzugten Ausführungsform der Erfindung sind die Verschaltungsinformationen und damit die zulässigen Kombinationsmöglichkeiten von Funktionsblöcken zu einem Waschprogramm direkt in dem Funktionsblock als Verschaltungsdatenobjekt gespeichert. In einer Variante ist es auch möglich, die Verschaltungsinformationen indirekt, nämlich z.B. in einer zentralen Datenbank abzulegen. Dazu wird die Identifikationsnummer des Funktionsblocks verwendet und in der Datenbank ist zu der Identifikationsnummer das Funktionalitätsdatenobjekt und/oder das Bauteildatenobjekt und/oder das Verschaltungsdatenobjekt abgelegt.

In einer bevorzugten Ausführungsform der Erfindung sind in einem Funktionsblock zumindest drei Datensätze bzw. Parameter gespeichert, nämlich betreffend die:
1. Geschwindigkeit. Dies umfasst alle Geschwindigkeitsanpassungen - oder Änderungen, also z.B. die Portalgeschwindigkeit, die Hubgeschwindigkeit, die Zustellgeschwindigkeit von einzelnen Aggregaten. Die Geschwindigkeiten können je nach gewählter Qualitätsstufe unterschiedlich hoch sein.
2. Chemiekonzentration (z.B. Vorgabebereich Vorreiniger 1-15%) und
3. Ablaufvariante (dieselbe Funktionalität, z.B. Radwäsche, kann mit unterschiedlichen Ablaufvarianten erreicht werden, wie z.B. Radwaschbürstenrotation mit einmaligem Drehrichtungswechsel oder mehrmaliger Drehrichtungswechsel bei gleichzeitiger Verlängerung der Bearbeitungszeit).

Nach Auslieferung der Waschanlage, kann jeder Funktionsblock vom Betreiber in unterschiedlichem Umfang geändert bzw. manipuliert werden.

In einer ersten Variante kann eine Änderung nur einheitlich für alle Funktionsblöcke und alle Waschprogramme einer Waschanlage ausgeführt werden. Alle Waschprogramme und alle enthaltenen Funktionsblöcke sind einheitlich z.B. auf kurze Prozesszeit optimiert.

In einer zweiten Variante kann eine Änderung der Funktionsblöcke zwar für eine Anlage unterschiedlich, aber nur einheitlich für ein Waschprogramm ausgeführt werden. Beispielsweise ist Waschprogramm 1 und alle darin enthaltenen Funktionsblöcke auf kurze Prozesszeit optimiert, während Waschprogramm 2 und alle darin enthaltenen Funktionsblöcke auf maximale Reinigung und Trocknung optimiert sind.

In einer dritten Variante kann eine Änderung aller Funktionsblöcke auch für jedes Waschprogramm der Anlage einzeln und sogar jeden Funktionsblock einzeln geändert werden. So kann zB. eingestellt sein: Waschprogramm mit maximaler Reinigung in der Vorwäsche, aber zeitoptimierter Bürstenwäsche und maximales Trocknungsergebnis. Weiterhin kann z.B. die Vorreinigerkonzentration im Funktionsbaustein je Programm individuell eingestellt werden. Ein erster Funktionsblock kann somit sogar unterschiedlich und individuell eingestellt oder geändert werden wie ein zweiter Funktionsblock in demselben Waschprogramm.

Zudem ist ein Waschprogramm in vier Phasen unterteilt:
1. Vorwäsche,
2. Bürstenwäsche
3. Konservierung / Pflege
4. Trocknung.

Ein Funktionsblock kann einer dieser vier Phasen oder Kategorien zugeordnet sein.

Wenn innerhalb dieser Kategorie / Phase mehrere Funktionsblöcke aktivierbar sind, ist eine Priorität für den Funktionsblock konfiguriert, die ebenfalls als Datensatz im Funktionsblock gespeichert ist. Wenn z.B. in einem Waschprogramm mehrere Funktionsblöcke aus der gleichen Waschphase verwendet werden, so regelt die Priorität, welcher Funktionsblock zuerst und welche nachfolgend abgearbeitet werden. So kann z.B. gesteuert werden, dass eine Insektenreinigung mit höherer Priorität und damit vor einem Schaumauftrag ausgeführt werden soll.

Ein Funktionsblock bezieht sich somit auf einen Waschprogrammabschnitt, wie z.B. "Radwäsche". Ein Funktionsblock kann in unterschiedlichen Ablaufvarianten betrieben werden. Dabei können die Ablaufvarianten unterschiedliche Maschinenbauteile bzw. Betriebsaggregate erfordern. Im Beispiel der Radwäsche wird z.B. in einer ersten Ablaufvariante, die Radwaschbürste vom/zum Rad bewegt, was den Betrieb eines Zustellmotors erfordert. In einer zweiten Ablaufvariante kann die Radwäsche nur mit Hochdruck ausgeführt werden. In diesem Fall wird die Hochdruckdüse aktiviert und eine Bewegung der Radwaschbürste bzw. der Motorbetrieb ist nicht erforderlich. Falls z.B. der Zustellmotor im erfassten Zustand der Maschine als nicht vorhanden oder defekt identifiziert worden ist, kann der Funktionsblock "Radwäsche" dennoch in der zweiten Ablaufvariante angeboten und fehlerfrei ausgeführt werden.

Ein Funktionsblock hat somit bestimmte Anforderungen auf Bauteilebene. So setzt z.B. eine Bürstenwäsche das Maschinenbauteil "Bürste" voraus. Welche technischen Voraussetzungen, insbesondere auf Bauteilebene, mit einem bestimmten Funktionsblock verbunden sind, sind in dem jeweiligen Funktionsblock hinterlegt und fest codiert. Ein Funktionsblock umfasst somit Informationen über eine zulässige Verschaltbarkeit im Prozessablauf mit anderen Funktionsblöcken. So kann - schematisch beschrieben - für einen Block 1 definiert sein, dass vor dessen Ausführung notwendigerweise Block a und b und anschließend Block d auszuführen sind. Beispielsweise kann definiert sein, dass vor einer "Trocknung" immer eine "Wäsche" stattgefunden haben muss. Oder vor dem Schritt "Intensivreinigung" ist es notwendig, dass ein Reiniger appliziert worden ist. Weiterhin können bestimmte andere Funktionsblöcke in einer White-List hinterlegt sein, die mit dem jeweiligen Funktionsblock verschaltet werden dürfen. Entsprechend können bestimmte andere Funktionsblöcke in einer Black-List hinterlegt sein, die nicht zulässig zu einem Waschprogramm verschaltet werden können und somit nicht kombiniert werden dürfen. In einer bevorzugten Ausführungsform der Erfindung sind die Verschaltungsinformationen und damit die zulässigen Kombinationsmöglichkeiten von Funktionsblöcken zu einem Waschprogramm direkt in dem Funktionsblock gespeichert.

Das Bestimmen von aktivierbaren Funktionsblöcken wird in Antwort auf den eingelesenen Bestückungsdatensatz ausgeführt. Das Bestimmen wird automatisch durch einen Funktionalitätsalgorithmus ausgeführt. Dem Betreiber wird eine Menge von Funktionsblöcken angeboten. Diese sind entweder unmittelbar auf der Anlage zur Auswahl verfügbar oder sie können über eine Schnittstelle von einem Server oder einer Datenbank eingelesen werden. Aus dieser Menge von Funktionsblöcken werden zum Erzeugen von Waschprogrammen auf der jeweiligen Anlage nur solche zur Auswahl durch den Betreiber angeboten, die in der jeweiligen Anlage auch aktivierbar sind. Dies ist in der Regel nur eine Auswahl aus der Menge von Funktionsblöcken. Grundsätzlich sind nur diejenigen Funktionsblöcke aktivierbar, für die die notwendigen Maschinenbauteile in der Anlage ausgebildet sind. So kann z.B. der Funktionsblock "Felgenreinigung" nur aktivierbar sein, wenn die beiden Maschinenbauteile "Felgenbürsten" auf beiden Fahrzeugseiten in der Anlage verbaut sind. Dies hat den Vorteil, dass der Betreiber auch nur diejenigen Funktionsblöcke auswählen kann, die er vor Ort auf seiner Anlage mit der jeweiligen Ausrüstung auch ausführen kann. Die anderen Funktionsblöcke werden ihm erst gar nicht angeboten. Aus der Menge der aktivierbaren Funktionsblöcke wählt der Betreiber dann bestimmte aus. Aus seinen Eingaben (seiner Auswahl) und den Informationen in den ausgewählten Funktionsblöcken zu deren Verschaltbarkeit wird dann automatisch ein Programmablauf zu einem Waschprogramm berechnet und erzeugt. Dies hat den Vorteil, dass zu jedem Zeitpunkt neue Funktionsblöcke definiert und bereitgestellt und zu einem Waschprogramm verschaltet werden können, ohne dass die Maschinensteuerung geändert werden muss.

Abhängig von den aktuell erfassten Gegebenheiten und Anforderungen, die in dem Bestückungsdatensatz repräsentiert sind, werden die in dem spezifischen Fall ausführbaren aktivierbare Funktionsblöcke bestimmt und - z.B. auf einer (grafischen) Benutzeroberfläche - zur Auswahl durch den Anwender ausgegeben. Daraufhin hat der Anwender, insbesondere der Betreiber oder Servicetechniker, die Möglichkeit, bestimmte Funktionsblöcke auszuwählen, die er gerne auf der Maschine für seine Kunden zur Anwendung anbieten möchte. Als vorteilhaft erweist es sich, dass der Anwender nicht über spezifischen Wissen über die technische Auslegung der Waschanlage verfügen muss. Es werden ihm automatisch nur diejenigen Funktionsblöcke zur Auswahl angeboten, die bei den erfassten Betriebsbedingungen (repräsentiert im Bestückungsdatensatz) ausführbar sind und damit in der Regel nur eine Auswahl. Alternativ kann die Auswahl nicht durch eine Benutzereingabe, sondern aufgrund von Voreinstellungen/Werkseinstellungen erfasst werden oder über eine Schnittstelle von separaten elektronischen Modulen eingelesen werden. Ein Vorteil der Erfindung ist auch darin zu sehen, dass der Anwender keine zeitliche Reihenfolge bei der Auswahl seiner Funktionsblöcke beachten muss. Die zeitliche Verschaltung zu einem Waschprogramm ergibt sich automatisch aus den Verschaltungsregeln und wird erfindungsgemäß automatisch berechnet. So kann der Anwender beispielsweise einen Funktionsblock C, dann A und dann B auswählen. Das erzeugte Waschprogramm hat aber aufgrund der hinterlegten Verschaltungsregeln die Abfolge A; B und C.

Vorzugsweise werden alle Schritte des oben beschriebenen Verfahrens automatisch ausgeführt, insbesondere erfolgt das Bestimmen von aktivierbaren Funktionsblöcken und das Erzeugen eines Waschprogramms automatisch. Damit kann die Effizienz der Anlagen-Inbetriebnahme gesteigert und Fehlerquellen aufgrund von falschen oder nicht optimalen manuellen Konfigurationen vermieden werden.

In einer vorteilhaften Ausführungsform der Erfindung wird das Erzeugen des Waschprogramms insbesondere vor oder während der Inbetriebnahme der Waschanlage ausgeführt. Dies hat den Vorteil, dass die Waschanlage weniger fehleranfällig betrieben werden kann, indem deren Betrieb an die aktuellen Betriebsbedingungen und an die Ausstattung der Waschanlage angepasst werden kann. Alternativ kann das erzeugte Waschprogramm auch während des Betriebs auf Basis von dynamisch erfassten Betriebskonstellationen angepasst und/oder optimiert werden. Damit können die Wartungskosten gesenkt werden.

In einer anderen bevorzugten Ausführungsform der Erfindung umfasst der Bestückungsdatensatz die Ausrüstung der Anlage zur Auswahl von aktivierbaren Funktionsblöcken. Der Bestückungsdatensatz kann auch die externen Betriebsbedingungen der Waschanlage betreffen, wie z.B. den Wasserversorgungsdruck, die Qualität von Waschmitteln, die Umgebungstemperatur etc. Diese Größen werden zur Waschprogrammerzeugung berücksichtigt. Dies hat den Vorteil, dass die Erzeugung der Waschprogramme adaptiv an die aktuellen Gegebenheiten und Betriebsbedingungen angepasst werden kann. Dies führt in Folge zu deutlichen Kosteneinsparungen.

In einer weiteren bevorzugten Ausführungsform der Erfindung erfolgt das Betreiben der Waschanlage mit dem erzeugten Waschprogramm nur nach Erfassen eines Verifikationssignals. Damit kann die Sicherheit des Anlagenbetriebs erhöht werden, indem sozusagen ein Plausibilitätscheck durchgeführt wird. Der Betreiber der Anlage oder ein extern zugeschalteter Techniker kann dann das erzeugte Waschprogramm freigeben oder freischalten. Es ist auch möglich, dass das erzeugte Waschprogramm mit in einer Datenbank hinterlegten Menge von Referenzprogrammen verglichen wird oder indem bestimmte häufige Fehlerkonstellation automatisch überprüft werden.

In einer weiteren bevorzugten Ausführungsform der Erfindung wird das erzeugte Waschprogramm einer automatischen Plausibilitätsüberprüfung unterzogen, um im Fehlerfall eine Fehlermeldung auszugeben. Die Fehlermeldung kann einen automatisch erzeugten Korrekturvorschlag umfassen und/oder kann eine Angabe von technischen Folgen bei Fehlbetrieb der Waschanlage umfassen. Wenn z.B. aufgrund von aktuell erfassten Betriebsbedingungen eine zu hohe Förderung der Dosierpumpe eingestellt ist, so kann auf den erhöhten Dosiermittelverbrauch und damit verbundene erhöhte Kosten hingewiesen werden.

Das vorstehend beschrieben Verfahren kann als Computerprogramm implementiert sein. Eine weitere Aufgabenlösung sieht somit ein Computerprogramm vor zur Durchführung aller Verfahrensschritte des oben näher beschriebenen Verfahrens, wenn das Computerprogramm auf einem Computer, einem elektronischen Gerät oder Bauteilausgeführt wird. Dabei ist es auch möglich, dass das Computerprogramm auf einem für den Computer oder das elektronische Gerät oder Bauteil lesbaren Medium gespeichert ist.

Das Verfahren wird vorzugsweise als plattformunabhängige Web-basierte Applikation implementiert sein. Dies hat den Vorteil, dass keine weiteren Installationserfordernisse seitens des Betreibers notwendig sind. Der Anwender greift über eine vorzugsweise IPbasierte Schnittstelle auf einen Server zu, auf dem das Computerprogramm zur Ausführung des Verfahrens installiert ist.

Eine weitere Aufgabenlösung besteht auch in einem Computerprogrammprodukt, das in einen Speicher eines Computers oder eines elektronischen Gerätes geladen oder ladbar ist mit einem Computerprogramm zur Durchführung des oben näher beschriebenen Verfahrens, wenn das Computerprogramm auf dem Computer oder dem elektronischen Gerät ausgeführt wird. Bei dem elektronischen Gerät kann es sich um einen Steuerrechner für die Waschanlage handeln, der in die Waschanlage in einer Schalt- und Steuereinheit integriert oder über eine Schnittstelle als separates Modul zugeschaltet ist.

Gemäß einem weiteren Aspekt betrifft die Erfindung eine Waschprogrammerzeugungseinheit, die zum Erzeugen einer Menge von Waschprogrammen für eine automatische Waschanlage für Fahrzeuge bestimmt ist. Die Waschprogrammerzeugungseinheit umfasst:
- Eine Eingangsschnittstelle zum Einlesen eines Bestückungsdatensatzes, der die aktuelle Bestückung der Waschanlage mit Maschinenbauteilen repräsentiert;
- Einer Prozessoreinheit zum Berechnen einer Menge von aktivierbaren Funktionsblöcken auf Basis des über die Eingangsschnittstelle eingelesenen Bestückungsdatensatzes;
- Einer Benutzerschnittstelle, die zum Ausgeben der von der Prozessoreinheit berechneten Menge von aktivierbaren Funktionsblöcken bestimmt ist und, die zum Erfassen einer Auswahl der ausgegebenen aktivierbaren Funktionsblöcke bestimmt ist;
- wobei die Prozessoreinheit auch dazu bestimmt ist, ein Waschprogramm zu berechnen bzw. zu erzeugen auf Basis der erfassten ausgewählten aktivierbaren Funktionsblöcke. Die Waschanlage wird dann mit den erzeugten Waschprogrammen betrieben.

Vorzugsweise umfasst die Waschprogrammerzeugungseinheit bzw. der Programmkonfigurator eine (grafische) Benutzerschnittstelle, über die sie/er gesteuert und bedient wird.

Die Waschprogrammerzeugungseinheit umfasst vorzugsweise einen Schieberegler, der zur Erfassung einer Anwendereingabe einer Qualitätskennzahl in Abhängigkeit von einer Zeitkennzahl bestimmt ist. Der Anwender hat die Möglichkeit, die gewünschte Qualität der Wäsche einzustellen. Da die Qualität abhängig von der Dauer des Waschprogramms ist, wird die Dauer automatisch in Abhängigkeit von der bestimmten Dauer geregelt und somit ebenfalls automatisch geregelt. Andernfalls hat der Anwender auch die Möglichkeit, die Zeit einzustellen. Dann wird in Abhängigkeit von der bestimmten Zeitdauer des Waschprogramms, automatisch eine Qualitätskennzahl festgelegt.

In einem weiteren Aspekt bezieht sich die Erfindung auf eine Waschanlage mit einer solchen Waschprogrammerzeugungseinheit. Die Waschprogrammerzeugungseinheit kann jedoch auch als separates Modul, extern von der Waschanlage lokalisiert sein.

In der folgenden detaillierten Figurenbeschreibung werden nicht einschränkend zu verstehende Ausführungsbeispiele mit deren Merkmalen und weiteren Vorteilen anhand der Zeichnung besprochen.

### Kurze Beschreibung der Figuren

Fig. 1 zeigt ein Ablaufdiagramm eines Verfahrens gemäß einer bevorzugten Ausführungsform der Erfindung;
Fig. 2 eine schematische Übersicht über Regelgrößen zur Erzeugung des Waschprogramms;
Fig. 3 eine strukturelle Übersicht über eine Waschprogrammerzeugungseinheit gemäß einer bevorzugten Ausführungsform der Erfindung und
Fig. 4 eine schematische Darstellung einer Waschanlage mit einer Waschprogrammerzeugungseinheit gemäß einer bevorzugten Ausführungsform der Erfindung und
Fig. 5 eine schematische Darstellung eines Funktionsblockes gemäß einer bevorzugten Ausführungsform der Erfindung.

### Detaillierte Beschreibung der Erfindung

Im Folgenden wird die Erfindung unter Bezugnahme auf die Figuren und anhand von Ausführungsbeispielen erläutert.

Die Erfindung zielt auf die flexible Erzeugung von Waschprogrammen ab.

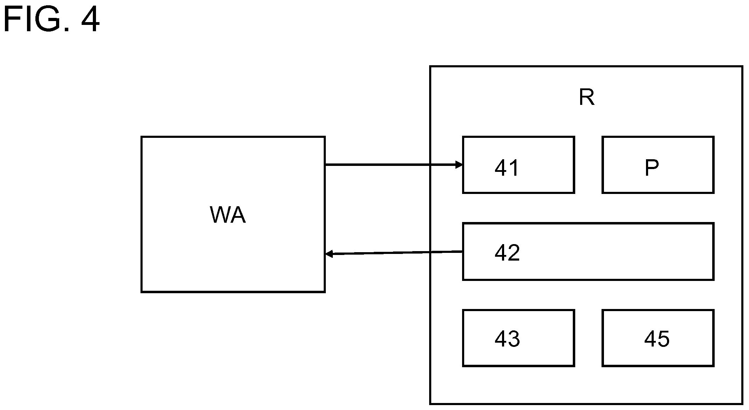

**Fig. 4** zeigt auf schematische Weise eine automatische Waschanlage WA, die an einen Betreiber ausgeliefert und fertig montiert ist. Um diese in Betrieb zu nehmen, müssen Vorgaben getätigt werden und die Waschprogramme müssen spezifiziert werden. Erfindungsgemäß sollen die Möglichkeiten zur Erzeugung von Waschprogrammen für den Betreiber erweitert werden.

Dazu ist eine elektronische Einheit vorgesehen, die zur lokalen Erzeugung von Waschprogrammen sozusagen am Ort des Betreibers dient: der Waschprogrammerzeuger. Der Waschprogrammerzeuger kann in eine Schalt- und Steuerzentrale der Waschanlage integriert sein oder als separater Rechner über eine Schnittstelle zugeschaltet werden.

Der Waschprogrammerzeuger umfasst eine Waschprogrammerzeugungseinheit R. Die Waschprogrammerzeugungseinheit R dient zur Erzeugung von Waschprogrammen, die auf der Waschanlage WA angeboten und ausführbar sein sollen. Das Waschprogramm wird somit regelbasiert erzeugt. Die Regeln beziehen sich auf den Bestückungsdatensatz, der spezifiziert, mit welchen Maschinenbauteilen die Waschanlage WA ausgestattet ist und auf die Eingaben eines Anwenders, die den Leistungsumfang der Anlage festlegen. Aus diesen Führungsgrößen wird automatisch mittels einer Programmlogik ein Waschprogramm erzeugt.

Die Waschprogrammerzeugungseinheit R umfasst einer Eingangsschnittstelle 41, die zum Einlesen des Bestückungsdatensatzes dient, der die aktuelle Bestückung der Waschanlage mit Maschinenbauteilen repräsentiert. Sie umfasst ferner eine Prozessoreinheit 42 zum Berechnen einer Menge von aktivierbaren Funktionsblöcken auf Basis des über die Eingangsschnittstelle 41 eingelesenen Bestückungsdatensatzes und eine Benutzerschnittstelle 43, die zum Ausgeben der von der Prozessoreinheit 42 berechneten Menge von aktivierbaren Funktionsblöcken bestimmt ist und, die zum Erfassen einer Auswahl der ausgegebenen aktivierbaren Funktionsblöcke bestimmt ist. Die Prozessoreinheit 42 ist weiterhin dazu bestimmt, ein Waschprogramm zu berechnen auf Basis der erfassten ausgewählten aktivierbaren Funktionsblöcke zum Betreiben der Waschanlage WA. Vorzugsweise umfasst die Waschprogrammerzeugungseinheit R ein weiteres UI (user interface), eine Regel-Benutzerschnittstelle 44 (insbesondere eine grafische GUI), über die sie vom Betreiber oder Techniker vor Ort im Kontext der Anlage WA gesteuert und bedient wird. In einer bevorzugten Ausführungsform der Erfindung, die in Fig. 4 gezeigt ist, kann die Waschprogrammerzeugungseinheit R zusätzliche noch einen Zusatzprozessor P umfassen, der zur Ausführung von weiteren Berechnungsprozessen bestimmt ist.

In einer bevorzugten Ausführungsform der Erfindung umfasst die Waschprogrammerzeugungseinheit R einen Schieberegler 45. Dieser kann als mechanisch-elektronisches Bauteil (im Sinne eines Schalters) ausgebildet sein. Der Schieberegler 45 kann auch virtuell ausgebildet sein. Dann wird er als Element auf einer grafischen Benutzeroberfläche 44 dargestellt und weist Schaltflächen zur Bedienung auf. Der Schieberegler dient zur gleichzeitigen Einstellung von einer Qualitätskennzahl und einer Zeitkennzahl bzw. -vorgabe für die Wäsche. Da beide Faktoren voneinander abhängig sind (proportional abhängig: je höher die Qualität sein soll, desto mehr Zeit benötigt die Wäsche und umgekehrt), ist der Schieberegler 45 so implementiert, dass bei einer Eingabe bzw. Änderung eines der beiden Faktoren sich automatisch und entsprechen der andere Faktor mitändert. Dies dient auch dazu, dem Anwender direkt mitzuteilen, dass er nur realisierbare Eingaben tätigen kann.

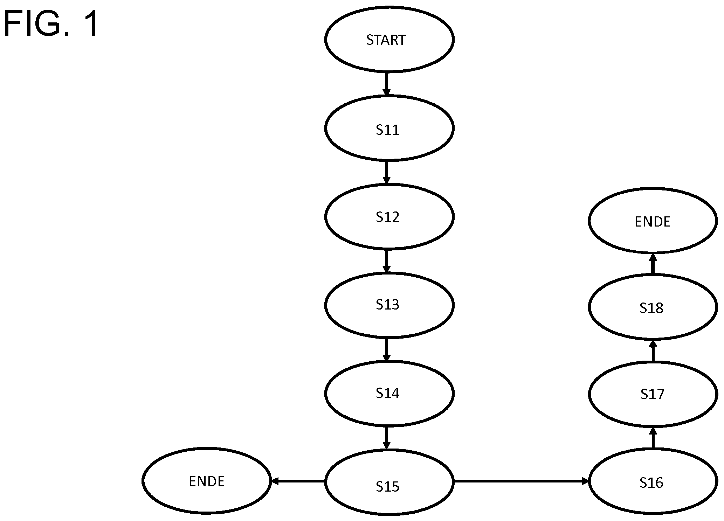

In **Fig. 1** wird ein typischer Ablauf eines Verfahrens dargestellt. Nach dem Start wird in Schritt S11 der Bestückungsdatensatz eingelesen. Dies erfolgt automatisch. Er kann aus einer vorgehaltenen Datei eingelesen oder über eine Netzwerkschnittstelle vom Hersteller der Anlage WA angefordert werden. In einer bevorzugten Ausführungsform der Erfindung kann eine Verifikation des lokal eingelesenen Bestückungsdatensatzes erfolgen, indem dieser mit einem Referenzbestückungsdatensatz auf Übereinstimmung verglichen wird, der vom Server über die Netzwerkschnittstelle eingelesen wird. In Schritt S12 werden auf Basis des Bestückungsdatensatzes eine Menge von aktivierbaren Funktionsblöcken auf Basis des eingelesenen Bestückungsdatensatzes automatisch berechnet. Dies hat den Vorteil, dass dem Anwender im nachfolgenden Schritt S13 nur die Funktionsblöcke als aktivierbar zur Auswahl angeboten und angezeigt werden, die er auch auf der aktuellen Anlage WA in der aktuellen Konfiguration bzw. Bestückung ausführen kann. In Schritt S 14 wird dann die Selektion des Anwenders erfasst. Der Anwender kann hier also wählen, welchen Leistungsumfang er auf der Anlage WA realisieren möchte. Mit diesen Informationen kann dann automatisch ein Waschprogramm erzeugt werden, bei dem die Regelgrößen Berücksichtigung finden (wie die aktuelle Bestückung der Maschine/Anlage WA und möglicherweise weitere Konfigurationen von Maschinenbauteilen, welcher Typ von Maschinenbauteil ist verbaut (Länge von Schlauchen, Pumpenleistungsvolumen etc.) und die Eingaben des Anwenders zur Auswahl von gewünschten Funktionsblöcken und zur Spezifikation des Leistungsumfanges, der auf der zu betreibenden Anlage WA realisiert werden soll. In Schritt S15 kann somit der Waschprogrammerzeuger mit den vorstehend genannten und weiteren Regelgrößen regelbasiert betrieben werden, so dass eine geregelte und automatische Erzeugung des Waschprogramms ausgeführt werden kann, das spezifisch auf die jeweiligen Anforderungen und technischen Gegebenheiten angepasst ist. Danach kann das Verfahren enden oder iterativ ausgeführt werden, um z.B. getätigte Eingaben zu modifizieren.

In einer bevorzugten Ausführungsform der Erfindung der Erfindung kann in Schritt S16 ein Verifikationssignal erfasst werden. Dies dient zur Erhöhung der Sicherheit. Hier hat der Anwender und/oder der Hersteller der Anlage WA (der über eine Netzwerkschnittstelle (Internet) zugeschaltet sein kann) die Möglichkeit, vor Inbetriebnahme der Anlage WA mit dem erzeugten und automatisch konfigurierten Programm zu kontrollieren, ob alle Einstellungen korrekt sind und ob das Waschprogramm in sich stimmt. Es kann voreingestellt sein, dass die Waschanlage WA nur dann in Betrieb genommen werden kann, wenn das Verifikationssignal erfasst worden ist.

Vorzugsweise kann in Schritt S17 das erzeugte Waschprogramm einer automatischen Plausibilitätsüberprüfung unterzogen werden. Im Fehlerfall kann in Schritt S18 eine Fehlermeldung ausgegeben werden.

Die Verfahrensschritte des Verfahrens werden vorzugsweise in der angegebenen Reihenfolge ausgeführt. Dies muss allerdings nicht in unmittelbarer Folge geschehen. So ist es z.B. möglich, dass das Erzeugen des Waschprogramms erst nach Ablauf einer gewissen Zeitspanne ausgeführt wird.

Alle Verfahrensschritte des Verfahrens können durch elektronische Vorrichtungen (Schaltkreise, z.B. auf einem printed circuit board PCB) implementiert werden, die zum Ausführen des jeweiligen Verfahrensschrittes geeignet sind. Umgekehrt können alle Funktionen, die von gegenständlichen Merkmalen ausgeführt werden, ein Verfahrensschritt eines Verfahrens sein. So kann z.B. der Verfahrensschritt "Einlesen eines Bestückungsdatensatzes" durch eine Eingangsschnittstelle implementiert werden, die über die genannte, entsprechende Funktionalität zum Einlesen verfügt.

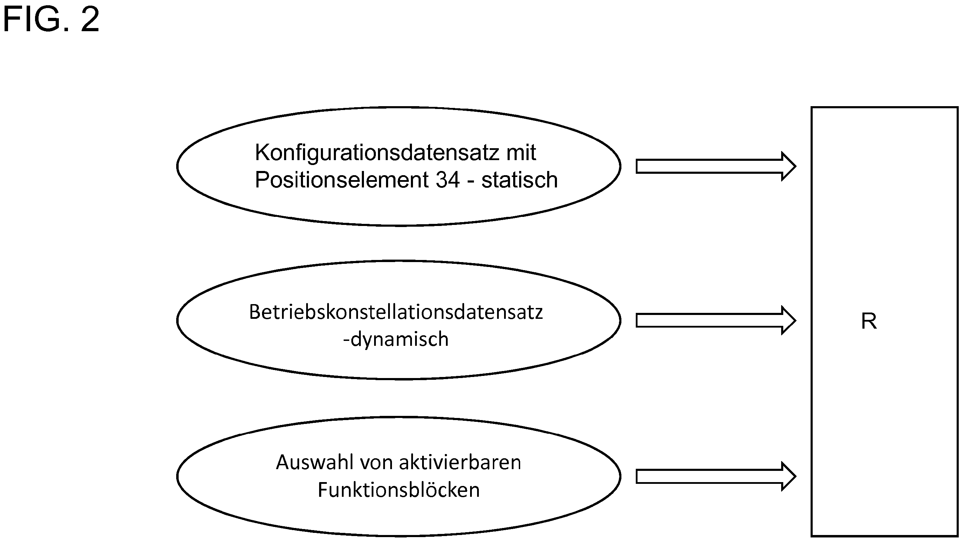

In **Fig. 2** sind die Größen dargestellt, die zur automatischen Waschprogrammerzeugung dienen. Dabei handelt es sich um den Bestückungsdatensatz mit einem dynamischen und einem statischen Anteil. Der dynamische Anteil (Betriebskonstellationsdatensatz) umfasst vorzugsweise Daten zu den aktuellen Betriebsbedingungen und Daten zur Auswahl von aktivierbaren Funktionsblöcken zur Spezifikation des gewünschten Leistungsumfanges. Die erwähnten Größen werden üblicherweise von unterschiedlichen Einheiten über unterschiedliche Schnittstellen eingelesen. Die Waschprogrammerzeugungseinheit R erzeugt dann das Waschprogramm.

Der Datensatz, der gemäß einer bevorzugten Ausführungsform der Erfindung zur Berechnung des Waschprogramms verwendet wird, umfasst den Bestückungsdatensatz 31 mit einem (dynamischen) Betriebskonstellationsdatensatz 32, der die aktuellen Betriebsbedingungen kennzeichnet (z.B. Wasserversorgungsdruck etc.), den (statischen) Konfigurationsdatensatz, und einen Selektionsdatensatz zur Definition der Auswahl von Funktionsblöcken (Leistungsumfang) und - optional - ein Positionselement 34, das angibt, an welcher Position ein bestimmtes Maschinenbauteil in der Waschanlage WA eingebaut ist. So macht es z.B. regelmäßig einen Unterschied, wo die Dosierpumpe(n) in der Waschanlage WA verbaut sind. Abhängig von deren Position und damit von deren Abstand zu den damit zu speisenden Betriebsaggregaten (z.B. den Bürsten), ergeben sich unter Umständen unterschiedliche Schlauchlängen. Um Totzeiten zu vermeiden, können nun die Dosierpumpen modifiziert angesteuert werden, um die Druckaufbauzeiten an den Waschablauf anpassen zu können. Entsprechendes gilt für die Bauhöhe der Waschanlage WA (z.B., wenn die Anlage nicht für Personenfahrzeuge, sondern für Nutzfahrzeuge ausgelegt ist und somit eine höhere Bauhöhe aufweist). Auch daraus können unterschiedliche Schlauchlängen resultieren und angepasste Betriebsaggregat- oder Maschinenbauteil-Einstellungen erforderlich machen.

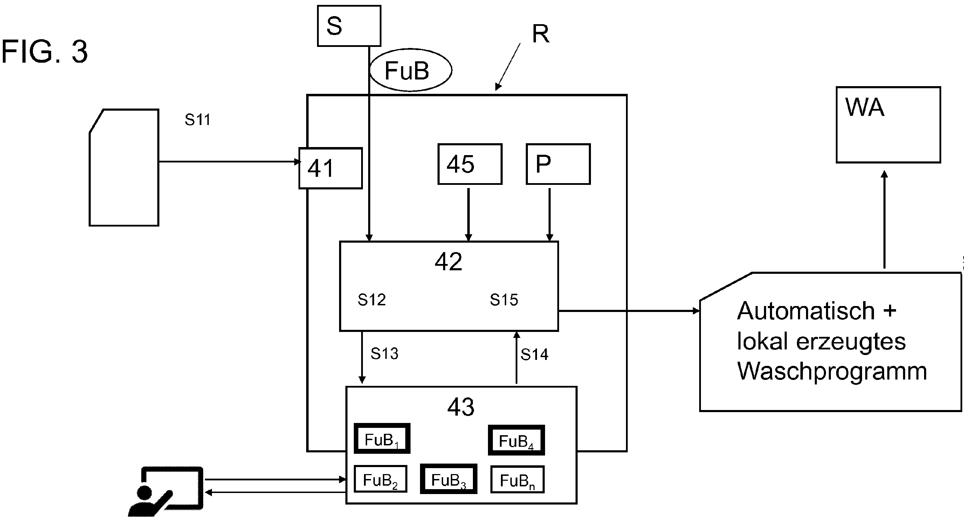

**Fig. 3** zeigt eine schematisch-strukturelle Ansicht der Waschprogrammerzeugungseinheit R im Betrieb. Zunächst werden in Schritt S11 der Bestückungsdatensatz und ggf. weitere für die Waschprogrammerzeugung relevante Informationen über die Schnittstelle 41 von z.B. einer Speicherkarte eingelesen. Dies kann, wie in Fig. 3 links oben dargestellt, durch Zugriff auf eine SD-Speicherkarte erfolgen. Eine Menge von grundsätzlich verfügbaren Funktionsblöcken FuB kann in einem Speicher der Waschprogrammerzeugungseinheit R vorgehalten werden (in Fig. 3 nicht dargestellt) oder über eine Schnittstelle zu einem Server S, wie in Fig. 3 oben dargestellt, eingelesen werden. Die Prozessoreinheit 42 ist in Schritt S12 dazu bestimmt, aus der Menge von grundsätzliche verfügbaren Funktionsblöcken FuB die aktivierbaren zu bestimmen, die aufgrund der Ausstattung der Waschanlage WA (Bestückungsdatensatz, Konfigurationsdatensatz) aktivierbar sind. Diese werden in Schritt S13 auf der grafischen Benutzeroberfläche 43 ausgegeben. Der Betreiber erhält dann die Möglichkeit aus den angezeigten aktivierbaren Funktionsblöcken bestimmte auszuwählen, um den Leistungsumfang des zu erzeugenden Waschprogramms zu bestimmen. In Figur sind diese von Anwender ausgewählten Funktionsblöcke fett umrandet dargestellt, in diesem Beispiel also die Funktionsblöcke FuB₁, FuB₃ und FuB₄. Diese Selektion wird mit einem Selektionsdatensatz in Schritt S 14 an die Prozessoreinheit 42 weitergeleitet. Mit diesen Daten kann die Prozessoreinheit 42 automatisch und lokal auf der Anlage in Schritt S15 ein Waschprogramm erzeugen, das zur Ausführung an die Waschanlage WA weitergeleitet wird.

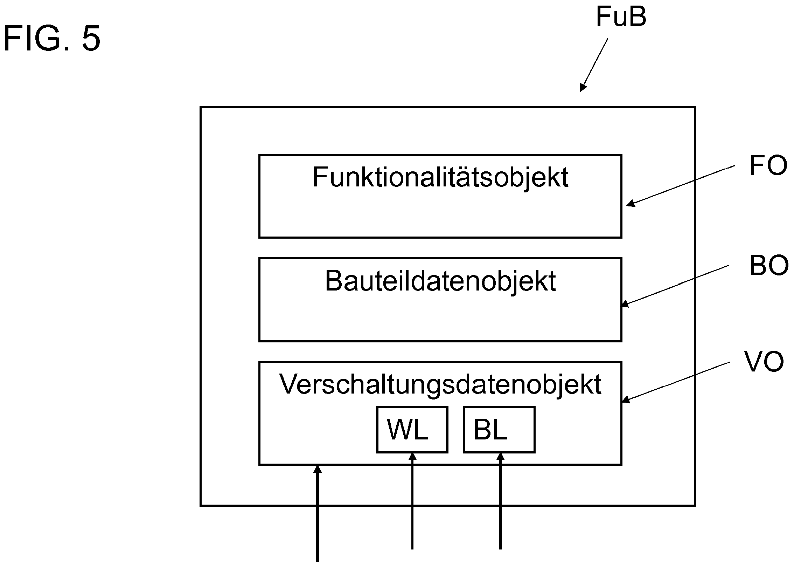

**Fig. 5** zeigt auf schematische Weise den Aufbau eines Funktionsblockes FuB. Dieser wird als digitales Objekt vorgehalten und verarbeitet. Er umfasst ein Funktionalitätsobjekt, FO das die jeweilige Funktionalität des Funktionsblockes FuB repräsentiert. Darüber hinaus beinhaltet er ein Bauteildatenobjekt BO, das die für seine Funktionalität erforderlichen Maschinenbauteile spezifiziert und ein Verschaltungsobjekt, VO in dem zulässigen Verschaltungsinformationen vorgehalten werden. Dies kann z.B. einen Regeldatensatz umfassen, der auf eine Black-List BL mit verbotenen Verschaltungen bzw. verbotenen Verschaltungsregeln und auf eine White-List mit zulässigen Verschaltungen bzw. zulässigen Verschaltungsregeln zugreift. Die Black-List BL und die White-List WL können über eine Serververbindung in jeweils aktualisierter Form abgerufen werden. Kumulativ oder alternativ können die Verschaltungsregeln zentral in einer Regelbasis hinterlegt sein und ebenfalls über eine Netzwerkschnittstelle zugänglich sein. Dies hat den Vorteil, dass die Regeln bzw. die Liste mit zulässigen und unzulässigen Funktionsblockverbindungen auch zentral geändert werden kann, ohne, dass eine Änderung an der Anlage notwendig ist. Dies soll in Fig. 5 durch die drei unten angeordneten Pfeile angedeutet sein.

Abschließend sei darauf hingewiesen, dass die Beschreibung der Erfindung und die Ausführungsbeispiele grundsätzlich nicht einschränkend in Hinblick auf eine bestimmte physikalische Realisierung der Erfindung zu verstehen sind. Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren. So kann die Erfindung auf unterschiedliche Typen von automatischen Waschanlagen angewendet werden, wie Portalwaschanlagen etc. Weiterhin liegt es z.B. ebenso im Rahmen der Erfindung alternativ oder kumulativ zur grafischen Benutzeroberfläche andere Bedien- oder Steuerelemente als Schnittstelle zur Eingabe der Auswahl von Funktionsblöcken bereitzustellen. Für einen Fachmann ist es insbesondere offensichtlich, dass die Erfindung nicht nur für bestimmte Konfigurationen von Waschanlagen angewendet werden kann, sondern auch für Waschanlagen, die mit unterschiedlichen Maschinenbauteilen ausgestattet sind oder mit Maschinenbauteilen, die unterschiedliche konfiguriert sind (z.B. unterschiedliches Leistungsspektrum einer Pumpe etc.).

Des Weiteren können die Bauteile des Waschprogrammerzeuger und/oder der Waschprogrammerzeugungseinheit R auf mehrere physikalische Produkte verteilt realisiert sein. Sie stehen dann über entsprechende Schnittstellen in Datenaustausch. Dies erhöht die Modularität des Systems.

Der Schutzbereich der vorliegenden Erfindung ist durch die Ansprüche gegeben und wird durch die in der Beschreibung erläuterten oder den Figuren gezeigten Merkmale nicht beschränkt.

## Patentansprüche

1. Verfahren zum Erzeugen eines Waschprogramms zum Betreiben einer automatischen Waschanlage (WA) für Fahrzeuge, umfassend folgende Verfahrensschritte:
- Einlesen (S11) eines Bestückungsdatensatzes, der die aktuelle Bestückung der Waschanlage mit Maschinenbauteilen repräsentiert;
- Bestimmen (S12) von aktivierbaren Funktionsblöcken aus einer vorgehaltenen Menge von Funktionsblöcken (FuB) auf Basis des eingelesenen Bestückungsdatensatzes und Bereitstellen (S13) derselben zur Auswahl; wobei ein Funktionsblock (FuB) ein digitales Objekt ist, in dem zu seiner Funktionalität die entsprechend erforderlichen Maschinenbauteile zugeordnet sind;
- Erfassen (S14) einer Auswahl der bereitgestellten aktivierbaren Funktionsblöcke;
- Automatisches Erzeugen (S15) des Waschprogramms mit einer berechneten Abfolge von ausgewählten aktivierbaren Funktionsblöcken zum Betreiben der Waschanlage (WA).

2. Verfahren nach Anspruch 1, bei dem das Erzeugen des Waschprogramms vor oder zur Inbetriebnahme der Waschanlage (WA) ausgeführt wird.

3. Verfahren nach einem der vorangehenden Ansprüche, bei dem der Bestückungsdatensatz einen unveränderlichen Konfigurationsdatensatz umfasst, der eine Konfiguration der in der Waschanlage (WA) verbauten Maschinenbauteile repräsentiert und einen veränderlichen Betriebskonstellationsdatensatz, der jeweils aktuell erfasste Betriebsbedingungen für die Maschinenbauteile repräsentiert.

4. Verfahren nach einem der vorangehenden Ansprüche, bei dem der Bestückungsdatensatz über eine Schnittstelle eingelesen oder in einem Speicher der Waschanlage (WA) gespeichert ist.

5. Verfahren nach einem der vorangehenden Ansprüche, bei dem der Bestückungsdatensatz ein Positionselement (34) umfasst, das eine Position des jeweiligen Maschinenbauteils in der Waschanlage (WA) kennzeichnet.

6. Verfahren nach einem der vorangehenden Ansprüche, bei dem ein Funktionsblock (FuB) eine White-List (WL) und/oder eine Black-List (BL) umfasst, die eine zulässige und/oder nicht-zulässige Verschaltbarkeit des jeweiligen Funktionsblockes mit anderen Funktionsblöcken definiert.

7. Verfahren nach einem der vorangehenden Ansprüche, bei dem das erzeugte Waschprogramm auch nach Auslieferung der Waschanlage (WA) durch zusätzliche Funktionsblöcke (FuB) dynamisch erweitert werden kann.

8. Verfahren nach einem der vorangehenden Ansprüche, bei dem das Betreiben der Waschanlage mit dem erzeugten Waschprogramm nur nach Erfassen (S16) eines Verifikationssignals erfolgt.

9. Verfahren nach einem der vorangehenden Ansprüche, bei dem das erzeugte Waschprogramm einer automatischen Plausibilitätsüberprüfung (S17) unterzogen und im Fehlerfall eine Fehlermeldung ausgegeben (S18) wird.

10. Waschprogrammerzeugungseinheit (R) zum Erzeugen von Waschprogrammen für eine automatische Waschanlage (WA) für Fahrzeuge bestimmt ist, umfassend:
- Einer Eingangsschnittstelle (41) zum Einlesen eines Bestückungsdatensatzes, der die aktuelle Bestückung der Waschanlage mit Maschinenbauteilen repräsentiert;
- Einer Prozessoreinheit (42) zum Bestimmen von auf Basis des über die Eingangsschnittstelle (41) eingelesenen Bestückungsdatensatzes aktivierbaren Funktionsblöcken aus einer Menge von Funktionsblöcken (FuB); wobei ein Funktionsblock (FuB) ein digitales Objekt ist, in dem zu seiner Funktionalität die entsprechend erforderlichen Maschinenbauteile zugeordnet sind;
- Einer Benutzerschnittstelle (43), die zum Ausgeben der von der Prozessoreinheit bestimmten Menge von aktivierbaren Funktionsblöcken bestimmt ist und, die zum Erfassen einer Auswahl der ausgegebenen aktivierbaren Funktionsblöcke bestimmt ist;
wobei die Prozessoreinheit (42) weiterhin dazu bestimmt ist, automatisch ein Waschprogramm zu erzeugen auf Basis der auf der Benutzerschnittstelle (43) erfassten Auswahl der ausgegebenen aktivierbaren Funktionsblöcke zum Betreiben der Waschanlage (WA).

11. Waschprogrammerzeugungseinheit (R) nach dem unmittelbar vorangehenden Anspruch, die mit einer Benutzerschnittstelle (44) ausgebildet ist.

12. Waschprogrammerzeugungseinheit (R) nach einem der unmittelbar vorangehenden, auf die Waschprogrammerzeugungseinheit bezogenen Ansprüche, die mit einem Schieberegler (45) ausgebildet ist, der zur Erfassung einer Eingabe einer Qualitätskennzahl in Abhängigkeit von einer Zeitkennzahl bestimmt ist.

13. Waschanlage (WA) mit einer Waschprogrammerzeugungseinheit (R) nach einem der unmittelbar vorangehenden, auf die Waschprogrammerzeugungseinheit bezogenen Ansprüche und mit einer Maschinensteuerung.

14. Computerprogramm mit Programmabschnitten zur Durchführung aller Verfahrensschritte des Verfahrens gemäß einem der vorangehenden Verfahrensansprüche, wenn das Computerprogramm auf einem Computer oder einem elektronischen Gerät ausgeführt wird.

## Claims

1. Method for generation of a washing program for operation of an automatic washing installation (WA) for vehicles, comprising the following method steps:
- reading-in (S11) an equipment data set which represents how the washing installation is currently equipped with machine components;
- specifying (S12) activatable function blocks from a stored group of function blocks (FuB) based on the read-in equipment data set and providing (S13) same for selection; wherein a function block (FuB) is a digital object in which the correspondingly necessary machine components are allocated to the functionality thereof;
- detecting (S14) a selection of the provided activatable function blocks;
- automatically generating (S15) the washing program with a computed sequence of selected activatable function blocks for operation of the washing installation (WA).

2. Method as claimed in claim 1, in which the generation of the washing program is carried out prior to, or for the purpose of, commissioning the washing installation (WA).

3. Method as claimed in any one of the preceding claims, in which the equipment data set comprises an unchangeable configuration data set which represents a configuration of the machine components installed in the washing installation (WA), and a changeable operating constellation data set which represents respective currently detected operating conditions for the machine components.

4. Method as claimed in any one of the preceding claims, in which the equipment data set is read-in via an interface or stored in a memory of the washing installation (WA).

5. Method as claimed in any one of the preceding claims, in which the equipment data set comprises a position element (34) which characterises a position of the respective machine component in the washing installation (WA).

6. Method as claimed in any one of the preceding claims, in which a function block (FuB) comprises a white list (WL) and/or a black list (BL) which defines a permitted or non-permitted connectability of the respective function block with other function blocks.

7. Method as claimed in any one of the preceding claims, in which the generated washing program can also be dynamically expanded by additional function blocks (FuB) after delivery of the washing installation (WA).

8. Method as claimed in any one of the preceding claims, in which the operation of the washing installation with the generated washing program takes place only after detection (S16) of a verification signal.

9. Method as claimed in any one of the preceding claims, in which the generated washing program is subjected to an automatic plausibility check (S17) and an error message is output (S18) in the case of a fault.

10. Washing program generation unit (R) intended for generation of washing programs for an automatic washing installation (WA) for vehicles, including:
- an input interface (41) for reading-in an equipment data set which represents how the washing installation is currently equipped with machine components;
- a processor unit (42) for specifying, based on the equipment data set read-in via the input interface (41), activatable function blocks from a group of function blocks (FuB); wherein a function block (FuB) is a digital object in which the correspondingly necessary machine components are allocated to the functionality thereof;
- a user interface (43) which is intended to output the group of activatable function blocks specified by the processor unit, and which is intended to detect a selection of the output activatable function blocks;
wherein the processor unit (42) is further intended to generate a washing program automatically based on the selection, detected on the user interface (43), of the output activatable function blocks for operation of the washing installation (WA).

11. Washing program generation unit (R) as claimed in the immediately preceding claim, which is configured with a user interface (44).

12. Washing program generation unit (R) as claimed in one of the immediately preceding claims relating to the washing program generation unit, which is configured with a slide control (45) which is intended for detection of an input of a quality characteristic in dependence upon a time characteristic.

13. Washing installation (WA) with a washing program generation unit (R) as claimed in one of the immediately preceding claims relating to the washing program generation unit, and having a machine controller.

14. Computer program with program sections for carrying out all method steps of the method as claimed in any one of the preceding method claims when the computer program is executed on a computer or an electronic device.

## Revendications

1. Procédé de génération d'un programme de lavage pour le fonctionnement d'une installation de lavage automatique (WA) pour véhicules, comprenant les étapes de procédé suivantes :
- lire (S11) un ensemble de données d'équipement qui représente la manière dont l'installation de lavage est actuellement équipée de composants de machine ;
- spécifier (S12) des blocs fonctionnels activables à partir d'un groupe stocké de blocs fonctionnels (FuB) sur la base de l'ensemble de données d'équipement lu et fournir (S13) ceux-ci pour la sélection ; dans lequel un bloc fonctionnel (FuB) est un objet numérique dans lequel les composants de machine nécessaires de manière correspondante sont affectés à la fonctionnalité de celui-ci ;
- détecter (S14) une sélection des blocs fonctionnels activables fournis ;
- générer automatiquement (S15) le programme de lavage avec une séquence calculée de blocs fonctionnels activables sélectionnés pour le fonctionnement de l'installation de lavage (WA).

2. Procédé selon la revendication 1, dans lequel la génération du programme de lavage est effectuée avant ou en vue de la mise en service de l'installation de lavage (WA).

3. Procédé selon l'une quelconque des revendications précédentes, dans lequel l'ensemble de données d'équipement comprend un ensemble de données de configuration non modifiable qui représente une configuration des composants de machine installés dans l'installation de lavage (WA), et un ensemble de données de constellation de fonctionnement modifiable qui représente des conditions de fonctionnement respectives actuellement détectées pour les composants de machine.

4. Procédé selon l'une quelconque des revendications précédentes, dans lequel le jeu de données d'équipement est lu via une interface ou stocké dans une mémoire de l'installation de lavage (WA).

5. Procédé selon l'une quelconque des revendications précédentes, dans lequel le jeu de données d'équipement comprend un élément de position (34) qui caractérise une position du composant de machine respectif dans l'installation de lavage (WA).

6. Procédé selon l'une quelconque des revendications précédentes, dans lequel un bloc fonctionnel (FuB) comprend une liste blanche (WL) et/ou une liste noire (BL) qui définit une possibilité de connexion autorisée ou non autorisée du bloc fonctionnel respectif avec d'autres blocs fonctionnels.

7. Procédé selon l'une quelconque des revendications précédentes, dans lequel le programme de lavage généré peut également être étendu dynamiquement par des blocs fonctionnels (FuB) supplémentaires après livraison de l'installation de lavage (WA).

8. Procédé selon l'une quelconque des revendications précédentes, dans lequel le fonctionnement de l'installation de lavage avec le programme de lavage généré n'a lieu qu'après détection (S16) d'un signal de vérification.

9. Procédé selon l'une quelconque des revendications précédentes, dans lequel le programme de lavage généré est soumis à un contrôle automatique de plausibilité (S17) et un message d'erreur est émis (S18) en cas de défaut.

10. Unité de génération de programmes de lavage (R) destinée à la génération de programmes de lavage pour une installation de lavage automatique (WA) pour véhicules, comprenant :
- une interface d'entrée (41) pour la lecture d'un jeu de données d'équipement qui représente la manière dont l'installation de lavage est actuellement équipée de composants de machine ;
- une unité de processeur (42) pour spécifier, sur la base de l'ensemble de données d'équipement lu via l'interface d'entrée (41), des blocs fonctionnels activables à partir d'un groupe de blocs fonctionnels (FuB) ; dans lequel un bloc fonctionnel (FuB) est un objet numérique dans lequel les composants de machine nécessaires de manière correspondante sont affectés à la fonctionnalité de celui-ci ;
- une interface utilisateur (43) qui est destinée à sortir le groupe de blocs fonctionnels activables spécifiés par l'unité de traitement, et qui est destinée à détecter une sélection des blocs fonctionnels activables sortis ;
dans lequel l'unité de traitement (42) est en outre destinée à générer un programme de lavage automatiquement sur la base de la sélection, détectée sur l'interface utilisateur (43), des blocs fonctionnels activables en sortie pour le fonctionnement de l'installation de lavage (WA).

11. Unité de génération de programme de lavage (R) selon la revendication immédiatement précédente, qui est configurée avec une interface utilisateur (44).

12. Unité de génération de programme de lavage (R) selon l'une des revendications immédiatement précédentes relatives à l'unité de génération de programme de lavage, qui est configurée avec une commande à coulisse (45) qui est destinée à la détection d'une entrée d'une caractéristique de qualité en fonction d'une caractéristique de temps.

13. Installation de lavage (WA) avec une unité de génération de programme de lavage (R) selon l'une des revendications immédiatement précédentes relatives à l'unité de génération de programme de lavage, et avec une commande de machine.

14. Programme d'ordinateur avec des sections de programme pour réaliser toutes les étapes du procédé selon l'une quelconque des revendications de procédé précédentes lorsque le programme d'ordinateur est exécuté sur un ordinateur ou un dispositif électronique.
